# EUROPEAN PATENT SPECIFICATION

(11) **EP 1 520 748 B1**
(45) Date of publication and mention of the grant of the patent: **19.12.2007**
(21) Application number: 04020322.6
(22) Date of filing: 26.08.2004
(51) Int. Cl.: B60N 2/24

(54) **Vehicular seat structure**
Sitzanordnung für Fahrzeug
Structure de siège de véhicule

(30) Priority: 30.09.2003 JP 2003339339
(43) Date of publication of application: 06.04.2005
(73) Proprietor: HONDA MOTOR CO., LTD., Tokyo (JP)
(72) Inventor: Fujihara, Kiyotaka, 4-1, Chuo 1-chome Wako-shi, Saitama (JP); Sugioka, Koichi, 4-1, Chuo 1-chome Wako-shi, Saitama (JP); Otsubo, Mamoru, 4-1, Chuo 1-chome Wako-shi, Saitama (JP); Ozawa, Eiji, 4-1, Chuo 1-chome Wako-shi, Saitama (JP); Saito, Toshikazu, 4-1, Chuo 1-chome Wako-shi, Saitama (JP); Shibata, Yumio, 4-1, Chuo 1-chome Wako-shi, Saitama (JP); Inokawa, Hiroshi, 4-1, Chuo 1-chome Wako-shi, Saitama (JP)
(74) Representative: Rupp, Christian

(56) References cited:
- DE-A1- 19 508 675
- DE-U- 29 518 853
- US-A1- 2003 102 694
- US-A1- 2003 127 891

## Description

The present invention relates to technique for the improvement of a vehicle provided with seats in a longitudinal direction.

### [Background Art]

For a vehicle provided with a rear seat for rear occupants to sit at the back of a front seat for a rider to sit, the technique of a motorcycle is known (for example, refer to a patent document 1).
[Patent document 1] JP-U-3-67287

A conventional type vehicle according to the patent document 1 is a scooter-type double motorcycle or a scooter-type three-wheeled vehicle in which a rider that steers a handlebar sits on a front seat and a rear occupant (rear occupants) sits/sit on a rear seat.
A vehicular seat structure with two separate rear seats is also known from US-A-2003/127 891.
Patent document EP 1 470 950 A2 (state of the art pursuant to Article 54(3), (4) EPC) shows a vehicle having a rear seat structure provided at the back of a front seat. Said rear seat structure comprises two individual seats being slightly inclined to each other while one of them can be slidably moved into a central position to be aligned with the front seat and thus partially overlapping the other individual rear seat.
It is desirable that in a vehicle such as a motorcycle and a three-wheeled vehicle, the number of occupants is also increased without large-sizing. Therefore, it is conceivable to enable seating plural rear occupants on the rear seat. In this case, it is also desired to secure the comfort of the rear occupants.

The object of the invention is to provide technique for enabling seating plural rear occupants on a rear seat in a vehicle provided with seats in a longitudinal direction, for enabling securing the comfort of the rear occupants and in addition, for enabling miniaturizing the vehicle.

The invention, as defined in Claim 1, is a vehicular seat structure in which a wide rear seat provided with right and left seated parts for rear occupants to sit is provided at the back of a front seat for a rider to sit, the rear seat is provided with one backrest for the right seated part and the left seated part, and the backrest is inclined diagonally forward when seeing in a traveling direction of a vehicle from the outside in a direction of the width of the seat structure.

The invention according to the additional features of Claim 2 is characterized in that convex portions for regulating the movement in the direction of the width of the body of the seated rear occupants are provided between each seated part in the rear seat and to the center of the backrest.

The invention according to the additional features of Claim 3 is characterized in that the front end of each seated part in the rear seat is concave backward.

The invention according to the additional features of Claim 4 is characterized in that the front seat is provided with a seated part for a rider, a backrest for the rider and side supports for the rider and a convex portion for regulating the movement in the direction of the width of the body of the seated rider is provided to the center of the front of the seated part for the rider.

The invention according to the additional features of Claim 5 is characterized in that the width of the front end of the rear seat is smaller than the width of the front seat.

According to the invention disclosed in Claim 1, as the wide rear seat provided with the right and left seated part for rear occupants to sit is provided at the back of the front seat for a rider to sit, the right and left two rear occupants can sit on the rear seat.
Further, according to the invention disclosed in Claim 1, the backrest for the right seated part and the left seated part is provided to the rear seat and the backrest is inclined diagonally forward when seeing in the traveling direction of the vehicle from the outside in the direction of the width of the seat structure. For right and left two rear occupants to sit on such a rear seat in a comfortable posture, they have only to sit with their bodies leaned along the inclination of the backrest. That is, in the traveling direction of the vehicle, the body of the left rear occupant is directed diagonally backward in a leftward direction and the body of the right rear occupant is directed diagonally forward in a rightward direction. Even if the wide rear seat is arranged near to the front seat and right and left two rear occupants sit on the rear seat, the knees of the rear occupants are not touched to the front seat.
Therefore, distance between the front seat and the rear seat can be reduced. An interval between the right and left seated parts is also not required to be increased. The whole length and the whole width of the vehicle are reduced and the vehicle can be miniaturized. In addition, though distance between the front and rear seats is small, the comfort of the right and left two rear occupants can be secured.

According to additional features of the invention disclosed in dependent Claim 2, as the convex portions for regulating the movement in the direction of the width of the body of seated rear occupants are provided between each seated part in the rear seat and to the center of the backrest, the lateral movement of the two rear occupants can be restricted. When the vehicle is turned, strong centrifugal force is applied to rear occupants. In the meantime, as the lateral movement of the rear occupants can be restricted by the convex portions, the effect of the centrifugal force can be minimized.

According to additional features of the invention disclosed in dependent Claim 3, as the front end of each seated part in the rear seat is concave backward, space at the feet of seated rear occupants can be sufficiently secured. Therefore, the comfort of the rear occupants can be enhanced.

According to additional features of the invention disclosed in dependent Claim 4, the front seat is provided with the backrest and the side supports and the convex portion for regulating the movement in the direction of the width of the body of a seated rider is provided to the center of the front of the seated part of the front seat. The seated rider can be sufficiently supported by the backrest, the side supports and the convex portion. In addition, the lateral movement of the rider can be restricted by the side supports and the convex portion. When the vehicle is turned, strong centrifugal force is applied to the rider. In the meantime, as the lateral movement of the rider can be restricted by the side supports and the convex portion, the effect of the centrifugal force can be minimized.

According to additional features of the invention disclosed in Claim 5, as the width of the front end of the rear seat is smaller than the width of the front seat, space at the feet of seated rear occupants can be sufficiently secured. Therefore, the comfort of the rear occupants can be enhanced.
[Fig. 1]

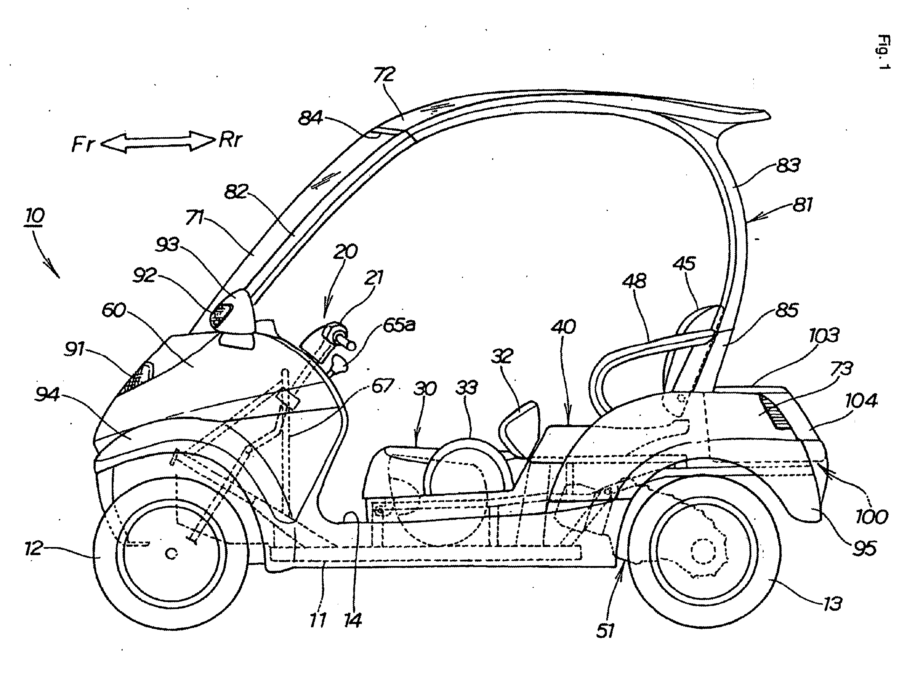

   Fig. 1 is a side view when a vehicle according to the invention is viewed from the left front;
[Fig. 2]

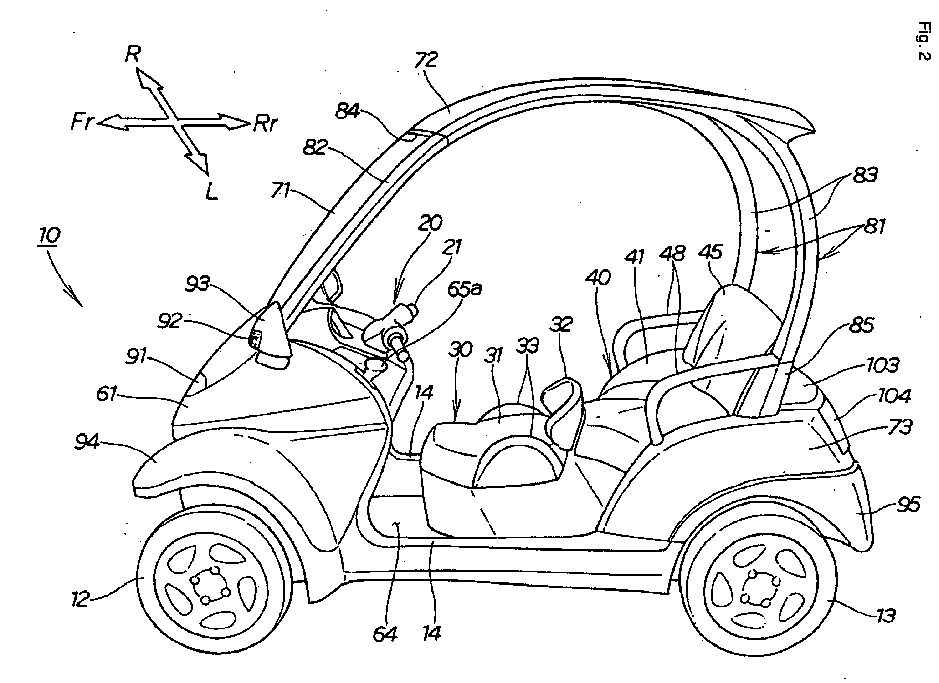

   Fig. 2 is a perspective view when the vehicle according to the invention is viewed from the left front;
[Fig. 3]

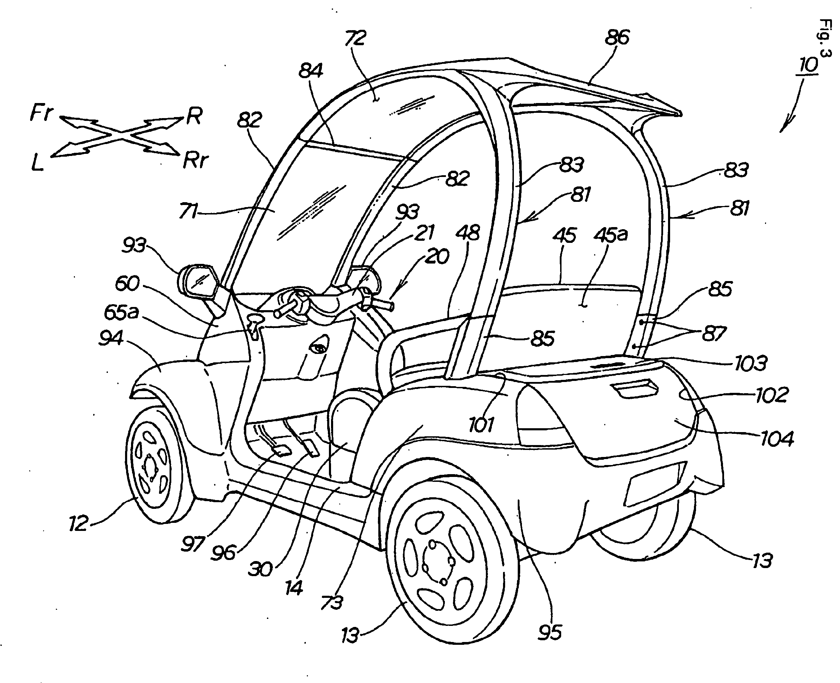

   Fig. 3 is a perspective view when the vehicle according to the invention is viewed from the left rear;
[Fig. 4]

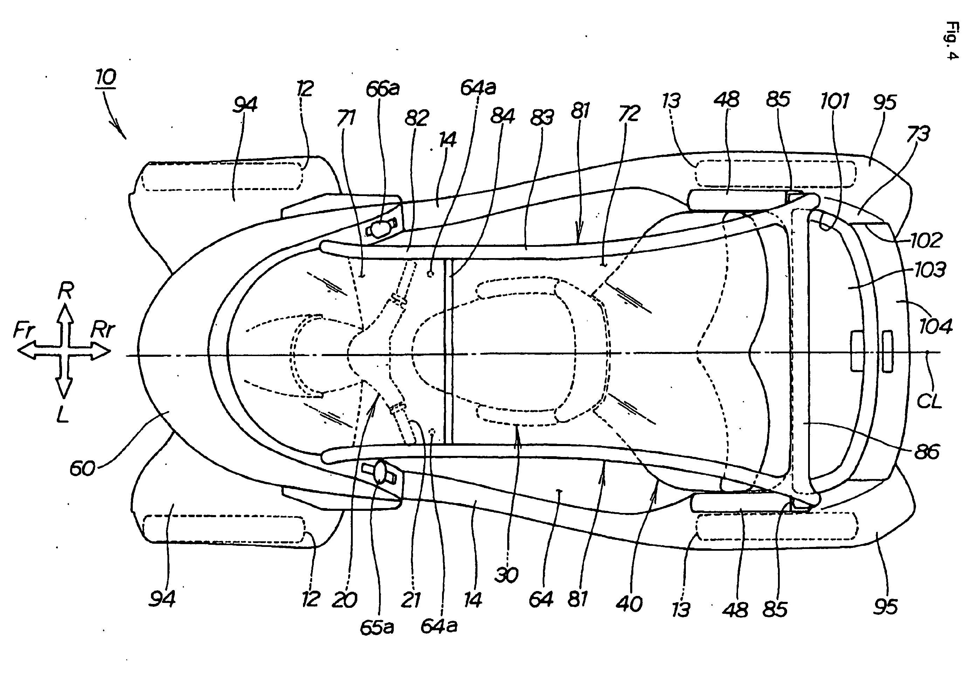

   Fig. 4 is a plan showing the vehicle according to the invention;
[Fig. 5]

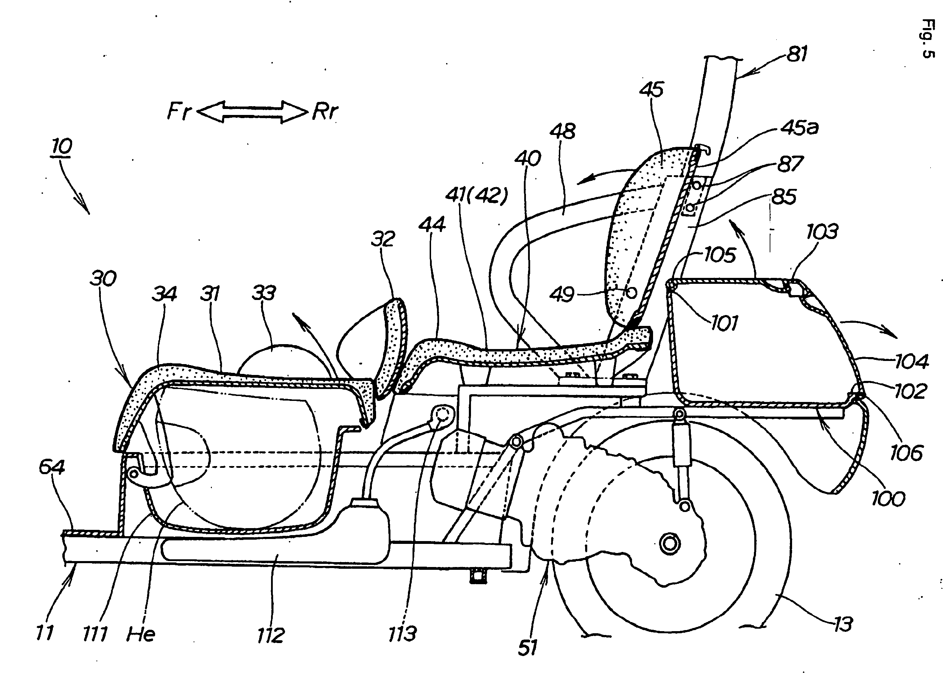

   Fig. 5 is a sectional view when the center and the rear of the vehicle according to the invention are viewed from the left side;
[Fig. 6]

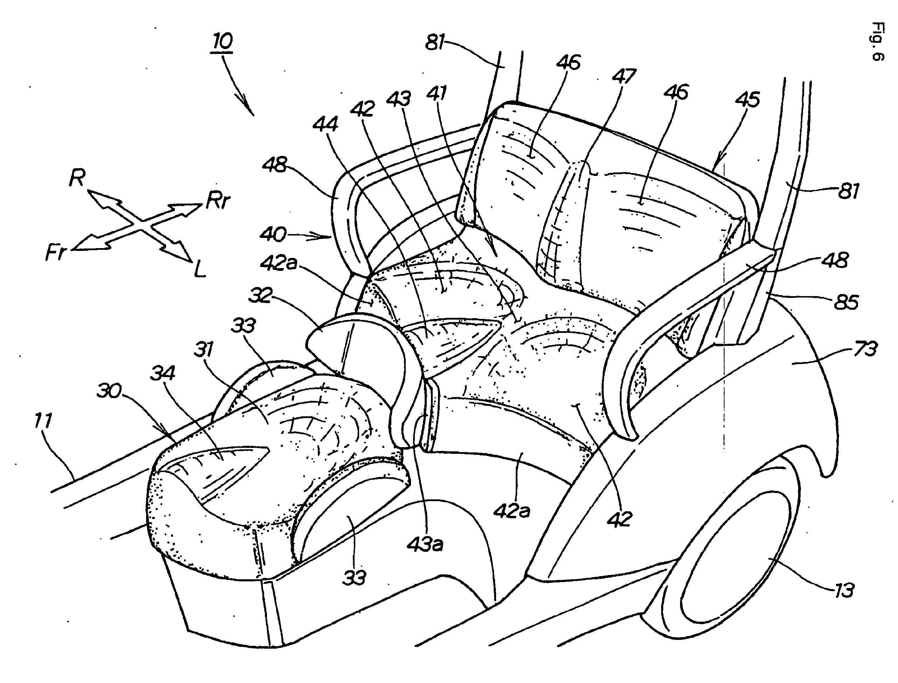

   Fig. 6 is a perspective view showing front and rear seats and the circumference in the vehicle according to the invention;
[Fig. 7]

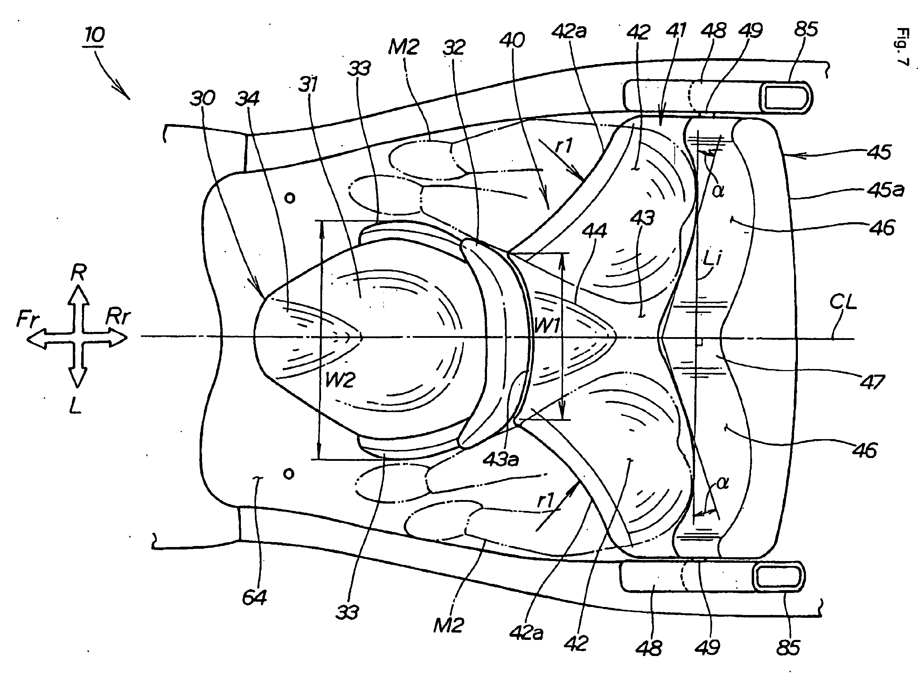

   Fig. 7 is a plan showing the front and rear seats and the circumference in the vehicle according to the invention;
[Fig. 8]

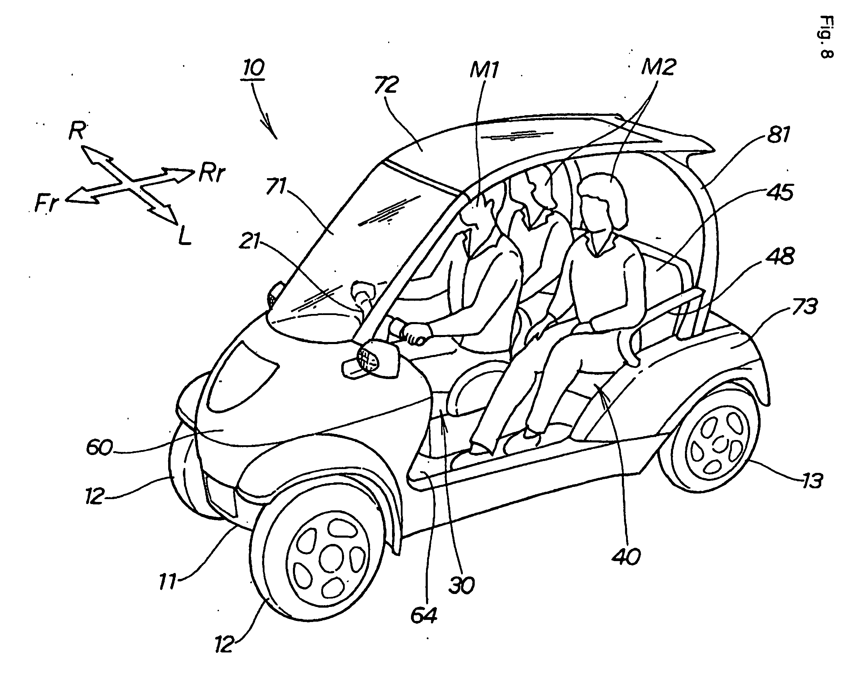

   Fig. 8 shows the action of the vehicle according to the invention;
[Fig. 9]

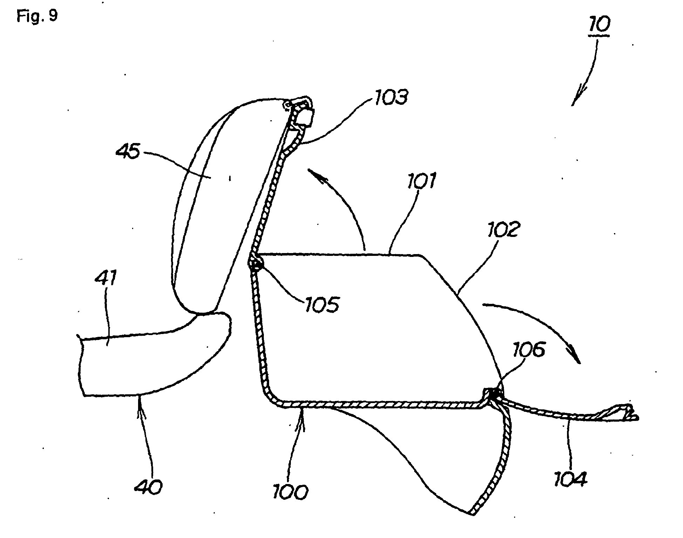

   Fig. 9 is a sectional view when a rear trunk of the vehicle according to the invention is viewed from the left side;
[Fig. 10]

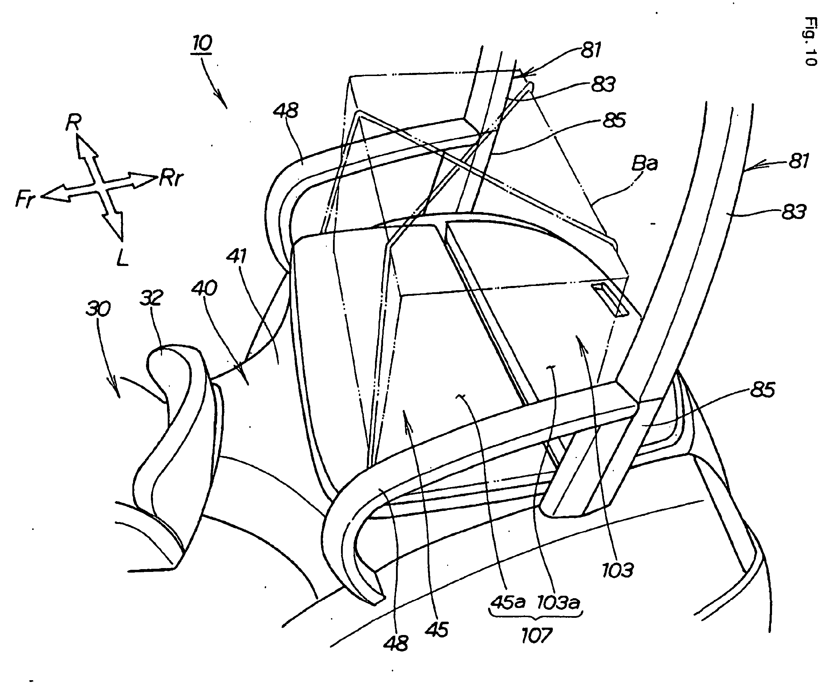

   Fig. 10 shows the configuration and the action of a backrest of the rear seat according to the invention and the rear trunk; and
[Fig. 11]

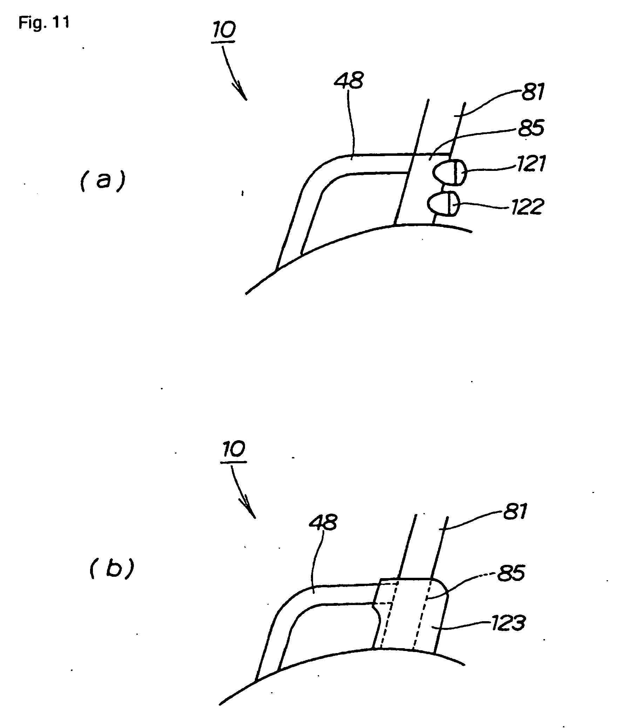

   Figs. 11 show transformed examples of an arm rest supporting member in a structure according to the invention. [0015]
Referring to the attached drawings, a preferred embodiment of the invention will be described below. "The front", "the rear", "the left", "the right", "the upside" and "the downside" comply with a direction viewed from a rider, "Fr" denotes the front side, "Rr" denotes the rear side, "L" denotes the left side, "R" denotes the right side, and "CL" denotes the center of the width of the body (the center of the body). The drawings shall be viewed in a direction of reference numbers.

Fig. 1 is a side view in case a vehicle according to the invention is viewed from a left front direction, Fig. 2 is a perspective view in case the vehicle according to the invention is viewed from the left front direction, Fig. 3 is a perspective view in case the vehicle according to the invention is viewed from a left rear direction, and Fig. 4 is a plan showing the vehicle according to the invention.

The vehicle 10 is a small-sized four-wheel vehicle provided with two right and left front wheels 12, 12 and two right and left rear wheels 13, 13 in the body (a body frame) 11, provided with a handlebar (21) type steering mechanism 20 in the front of the body 11, provided with a front seat 30 and a rear seat 40 in the center of the body 11, provided with a power unit 51 in a rear lower part of the body 11, further provided with a front cover 60 that covers the circumference of the front of the body 11, a wind screen 71 attached to the upside of the front cover 60, a roof 72 that is continuously extended backward from the upper end of the wind screen 71 and covers the upside of the front and rear seats 30, 40 and a rear cover 73 that covers the rear of the body 11.

The supporting structure of the roof 72 supports the roof 72 by right and left roof side pillars 81, 81 as shown in Fig. 3. The right and left roof side pillars 81, 81 are a roof pillar pipe arched from the front of the body to the rear of the body, and front pillars 82, 82 and rear pillars 83, 83 are combined.
The right and left front pillars 82, 82 are members which are extended backward and upward from the upper end of the front cover 60 in the front of the body and the upper ends of which a front cross member 84 crosses. The wind screen 71 is provided between the right and left front pillars 82, 82.

The right and left rear pillars 83, 83 are members which are extended upward from the upper ends of right and left supporting members 85, 85 provided to the rear of the body, which are further extended forward from their upper ends, the front ends of which are attached to the rear ends of the front pillars 82, 82 by bolts so that the members can be detached. A reference number 86 denotes a rear cross member that crosses the rear upper ends of the rear pillars 83, 83. The right and left supporting members 85, 85 support the rear pillars 83, 83 by attaching the right and left rear pillars 83, 83 to the upper ends by bolts 87, --- (see Fig. 3) so that the right and left rear pillars can be detached.

The roof 72 can be supported by attaching the substantially flat roof 72 to a frame composed of the right and left front pillars 82, 82, the right and left rear pillars 83, 83 and the front and rear cross members 84, 86 so that the roof can be detached.

As for the right and left roof side pillars 81, 81, the front pillars 82, 82 and the rear pillars 83, 83 may be also integrated. Out of each roof side pillar 81, only the front and the rear may be also a rigid pipe, the center may be also a member made of resin, and these members may be also combined.

As shown in Fig. 4, the rear end of the roof 72 is located at the back of the rear seat 40. The width of the roof 72 is substantially the same as the width of the body or slightly smaller than it. The side of the vehicle 10 is open, and a rider and occupants can freely get on/off.
As described above, the wind screen 71 covers a forward direction of the front seat 30 and the roof 72 can cover an upward direction of the front seat 30 and the rear seat 40. The wind screen and the roof can protect not only the rider but the occupants in the rear from rain and other. Luggage put on the rear seat 40 can be also protected from rain and other. Further, as only the roof 72 is provided and the sides are open, the rider and the occupants can easily get on/off though the roof 72 exists.

As shown in Fig. 4, a reference number 14 denotes a protruded edge, 21 denotes a handlebar, 60 denotes a front cover, 65a denotes a gear shift lever, 66a denotes a parking lever (see Fig. 4), 91 denotes a headlamp, 92 denotes a winker, 93 denotes a side mirror, 94 denotes a front fender, 95 denotes a rear fender, 96 denotes an accelerator pedal (see Fig. 3), and 97 denotes a brake pedal (see Fig. 3).

Fig. 5 is a side view acquired by viewing the center and the rear of the vehicle according to the invention from the left side. Fig. 6 is a perspective view showing the circumference of the front seat and the rear seat in the vehicle according to the invention. Fig. 7 is a plan showing the circumference of the front seat and the rear seat in the vehicle according to the invention. Fig. 8 shows the action of the vehicle according to the invention.

As shown in Fig. 5, in the vehicle 10, the rear seat 40 for occupants to sit is provided near to the rear of the front seat 30 for the rider to sit, the supporting members 85, 85 are provided at the back of the rear seat 40, a rear trunk 100 is provided at the back of a backrest 45 for occupants (M2) and the supporting members 85, 85, a front housing box 111 is provided under the front seat 30, and further, a fuel tank 112 is provided below the front housing box 111. A reference number 113 denotes an oil filler port.

The right and left supporting members 85, 85 are short struts attached to the rear of the body frame 11 so that the supporting members can be detached and also function as an arm rest supporting member. The supporting members 85, 85 are hereinafter called arm rest supporting members 85, 85.
The height (the hip point) of the rear seat 40 is slightly higher than the height of the front seat 30.
The front seat 30 can be vertically turned and also functions as a lid that closes an upper opening of the front housing box 111. The front housing box 111 can house luggage such as a helmet He.

As shown in Figs. 6 and 7, the front seat 30 is provided with a seated part for a rider 31, a backrest 32 and right and left side supports 33, 33. As for the seated part for a rider 31, a convex portion 34 for regulating the movement in a direction of the width of the body (the leftward movement L or the rightward movement R) of the seated rider is provided to the center of the front.

The seated rider can be sufficiently supported by the backrest for a rider 32, the side supports for a rider 33, 33 and the convex portion 34. In addition, the leftward or rightward movement of the rider can be restricted by the side supports 33, 33 and the convex portion 34. For example, when the vehicle 10 turns, strong centrifugal force is applied to the rider. In the meantime, as the leftward or rightward movement of the rider can be restricted by the side supports 33, 33 and the convex portion 34, the effect of centrifugal force can be minimized.

In the meantime, the rear seat 40 is a wide seat provided with right and left seated parts for occupants 42, 42 to a seat cushion 41 and is provided with one backrest 45 for occupants corresponding to the right and left seated parts 42, 42 and right and left arm rests for occupants 48, 48. Two occupants M2, M2 can be seated on the right and left seated parts for occupants 42, 42. As described above, as the wide rear seat 40 provided with the right and left seated parts 42, 42 is provided, the right and left two occupants M2, M2 can be seated on the rear seat 40.

The center of the front of the seat cushion 41 is in the shape of a substantially narrow trapezoid when it is viewed from the top. That is, the seat cushion 41 is provided with a flat center 43 between the slightly concave right and left seated parts for occupants 42, 42. The front end 43a of the center 43 is close to the rear end of the front seat 30.

The ridge line (contour) of the front end 42a of the left seated part 42 is concave backward in the shape of a circular arc of a radius r1 from the front end 43a of the center 43, being backed diagonally backward on the left side. Besides, the ridge line of the front end 42a of the right seated part 42 is concave backward in the shape of a circular arc of a radius r1 from the front end 43a of the center 43, being backed diagonally backward on the right side. As described above, the front ends 42a, 42a of the right and left seated parts for occupants 42, 42 are concave backward in the shape of the circular arc when it is viewed from the top. As the front end 42a, 42a of each seated part 42, 42 is made concave backward, space at the feet of the seated rear occupants M2, M2 can be sufficiently secured. Therefore, the comfort of the rear occupants M2, M2 can be enhanced.

Further, a convex portion 44 for regulating the movement in the direction of the width of the body of the seated right and left rear occupants M2, M2 is provided to the center 43 (between each seated part 42, 42) of the seat cushion 41.
As shown in Fig. 7, the width W1 of the front end 43a of the rear seat 40, that is, the width W1 of the front end 43a of the center 43 is smaller than the width W2 of the front seat 30 (that is, width W2 acquired by adding the width of the seated part 31 and the width of each side support 33, 33). Hereby, the space at the feet of the seated rear occupants M2, M2 can be sufficiently secured. Therefore, the comfort of the rear occupants M2, M2 can be enhanced.

The backrest 45 for occupants is inclined diagonally forward from the outside in the direction of the width of the body in a traveling direction of the vehicle 10 (in a forward running direction), that is, in a forward direction Fr. Detailedly, a left backrest bevel 46 out of the backrest 45 for occupants is directed diagonally forward in a leftward direction in the traveling direction of the vehicle 10 and a right backrest bevel 46 is directed diagonally forward in a rightward direction in the traveling direction of the vehicle 10.

More concretely, suppose that a straight line perpendicular to a center line CL of the width of the body and extended in the direction of the width of the body is Li as shown in Fig. 7. The left backrest bevel 46 is inclined leftward and backward by a tilt angle α based upon the straight line Li. The right backrest bevel 46 is inclined rightward and backward by the tilt angle α based upon the straight line Li. These backrest bevels 46, 46 are slightly concave backward in the shape of a circular arc.

For right and left two rear occupants M2, M2 to sit on the above-mentioned rear seat 40 in a comfortable posture, they have only to sit with their bodies inclined along the inclination of the backrest 45 and leaning on the backrest. That is, the body of the left rear occupant M2 is directed diagonally forward in the leftward direction in the traveling direction of the vehicle 10 and the body of the right rear occupant M2 is directed diagonally forward in the rightward direction. Even if the wide rear seat 40 is arranged near to the front seat 30 and right and left two rear occupants M2, M2 sit on the rear seat 40, the knees of the rear occupants M2, M2 are not touched to the front seat 30.

Therefore, distance between the front seat 30 and the rear seat 40 can be reduced. An interval between the right and left seated parts 42, 42 is also not required to be increased. The whole length and the whole width of the vehicle 10 can be reduced and the vehicle can be miniaturized. In addition, though distance between the front seat 30 and the rear seat 40 is small, the comfort of the right and left two rear occupants M2, M2 can be secured.

Further, in the backrest 45 for occupants, a convex portion 47 for regulating the movement in the direction of the width of the body of the seated rear occupants M2, M2 is provided in the center (between the right and left backrest bevels 46, 46). The convex portion 47 is a vertically long and narrow part.

As the convex portions 44, 47 for regulating the movement in the direction of the width of the body of the seated rear occupants M2, M2 are provided between each seated part 42, 42 of the rear seat 40 and in the center of the backrest 45, the lateral movement of the two rear occupants M2, M2 can be restricted. For example, when the vehicle 10 is turned, strong centrifugal force is applied to the rear occupants M2, M2. In the meantime, as the lateral movement of the rear occupants M2, M2 can be restricted by the convex portions 44, 47, the effect of the centrifugal force can be minimized.

As clear from the above description, as shown in Fig. 8, the vehicle 10 can be run in a state in which the rider M1 sits on the front seat 30 and the right and left rear occupants M2, M2 sit on the rear seat 40. Each rear occupant M2, M2 has only to sit on the rear seat 40 with his/her body slightly leaning diagonally forward and with both feet extended on the side of the front seat 30 and put on a floor 64.

As shown in Figs. 5 to 7, a pair of right and left arm rest supporting members 85, 85 are members that support a pair of right and left arm rests 48, 48 for the rear seat 40 and support a lower part of the backrest 45 of the rear seat 40 via a hinge 49 so that the backrest can be turned longitudinally.

The arm rests for occupants 48, 48 are supported by the arm rest supporting members 85, 85 provided at the back of the rear seat 40 and further, the backrest 45 for occupants can be also supported by the arm rest supporting members so that the backrest can be turned longitudinally. That is, the arm rest supporting members 85, 85 that support the arm rests 48, 48 also function as supporting members of the backrest 45. The body frame 11 can be simplified by sharing the supporting members 85, 85 and the vehicle 10 can be lightened.

Further, as the roof side pillars 81, 81 are supported by the arm rest supporting members 85, 85, the arm rest supporting members 85, 85 also function as supporting members that support the roof side pillars 81, 81 (see Fig. 3) in addition to supporting the arm rests 48, 48 and the backrest 45. Therefore, the supporting members 85, 85 can be more shared, as a result, the body frame 11 can be simplified, and the vehicle 10 can be lightened.

Next, relation between the backrest 45 of the rear seat 40 and the rear trunk 100 will be described.
Fig. 9 is a sectional view acquired by viewing the rear trunk according to the invention from the left side and Fig. 10 shows the configuration and the action of the backrest of the rear seat according to the invention and the rear trunk.

As shown in Figs. 5 and 9, the rear trunk 100 arranged immediately at the back of the backrest for occupants 45 is a rear housing box attached to the rear end of the body frame 11, having an upper opening 101 on the upside, also having a rear opening 102 in the rear and having large open area.
The upper opening 101 can be covered with an upper lid 103 and the rear opening 102 can be covered with a rear lid 104. The upper lid 103 is made of a flat plate so that the upper lid also functions as a deck for putting luggage and is substantially horizontal when the upper lid covers the upper opening 101.

The arm rest supporting members 85, 85 support the front end of the upper lid 103 via a hinge 105 so that the upper lid can be vertically turned. The arm rest supporting members 85, 85 also function as supporting members of the upper lid 103 in addition to supporting the arm rests 48, 48 and the backrest 45. Therefore, the supporting members 85, 85 can be more shared, as a result, the body frame 11 can be simplified, and the vehicle 10 can be lightened.

In the meantime, the lower end of the rear lid 104 is attached to the rear lower end of the rear trunk 100 via a hinge 106 so that the rear lid can be vertically turned. Hereby, the upper lid 103 and the rear lid 104 are configured so that they mutually open in reverse directions as so-called biparting lids.
Therefore, as shown in Fig. 9, the upper opening 101 and the rear opening 102 can be simultaneously opened by opening the upper lid 103 and the rear lid 104 as biparting lids. The upper opening 101 and the rear opening 102 mutually communicate. As the openings 101, 102 of the rear trunk 100 are greatly opened and luggage can be put or extracted by opening both the upper lid 103 and the rear lid 104 if necessary, the workability of housing is satisfactory.

As shown in Fig. 10, the rear face 45a of the backrest for occupants 45 is configured so that the rear face is substantially flat together with the top face 103a of the upper lid 103 in a closed state when the backrest 45 is folded forward. The backrest 45 can be folded forward until it hits on the seat cushion 41.

The rear face 45a of the backrest 45 when it is folded forward and the top face 103a of the upper lid 103 can be made a continuous large loaded face 107 between the right and left arm rests 48, 48 and between the right and left arm rest supporting members 85, 85. Therefore, large luggage Ba can be easily loaded onto the vehicle 10. In addition, as the arm rests 48, 48 and the arm rest supporting members 85, 85 exist on both right and left sides of the loaded face 107, the luggage Ba loaded onto the loaded face 107 is never displaced sideways.

Figs. 11A and 11B show transformed examples of the arm rest supporting members in a structure according to the invention.
Fig. 11A is a side view showing that various accessories such as a stop lamp 121 and a winker 122 are provided at the rear end of the arm rest supporting member 85.
Fig. 11B is a side view showing that the circumference of the arm rest supporting member 85 is covered with a cover 123 made of resin. Hereby, the appearance performance of the vehicle can be more enhanced.

In the embodiment of the invention, the vehicle 10 has only to be a three-wheeled vehicle and a four-wheel vehicle provided with at least one front wheel 12 and right and left two rear wheels 13, 13.

### [Industrial Applicability]

The vehicle according to the invention is particularly suitable for small-sized three-wheeled vehicle and four-wheel vehicle in which plural rear occupants can be seated on the rear seat provided at the back of the front seat.

### [Description of Reference Numbers]

10 --- Vehicle, 30 --- Front seat, 31 --- Seated part for rider, 32 --- Backrest for rider, 33 --- Side support for rider, 34 --- Convex portion, 40 --- Rear seat, 41Seat cushion, 42 --- Right and left seated parts for occupants, 42a --- Front end of seated part in rear seat, 44 --- Convex portion, 45 --- Backrest for occupants, 47--- Convex portion, M1 --- Rider, M2 --- Rear occupant, W1 --- Width of front end of rear seat, W2 --- Width of front seat

## Claims

1. Vehicular seat structure, wherein:
a wide rear seat (40) provided with right and left seated parts for rear occupants (42) to sit is provided at the back of a front seat (31) for a rider (M1) to sit;
the rear seat (40) is provided with one backrest (45) for the right seated part and the left seated part; and
the backrest (45) comprises a left backrest bevel (46) inclined leftward and a right backrest bevel (46) inclined rightward when seeing in a traveling direction of a vehicle (10).

2. Vehicular seat structure according to Claim 1, wherein:
convex portions (44, 47) regulating the movement in the direction of the width (W1, W2) of the body of the seated rear occupants (M2) are provided between each seated part (42) in the rear seat (40) and to the center of the backrest (45).

3. Vehicular seat structure according to Claim 1 or 2, wherein:
the front end of each seated part in the rear seat (42a) is concave backward.

4. Vehicular seat structure according to Claim 1, 2 or 3, wherein:
the front seat (30) is provided with a seated part for a rider (31), a backrest for the rider (32) and side supports for the rider (33); and
a convex portion (34) for regulating the movement in the direction of the width (W2) of the body of the seated rider (M1) is provided to the center of the front of the seated part for the rider (32).

5. Vehicular seat structure according to any of Claims 1 to 4, wherein:
the width of the front end of the rear seat (W1) is smaller than the width of the front seat (W2).

## Patentansprüche

1. Sitzanordnung für ein Fahrzeug, wobei:
ein breiter Rücksitz (40), welcher mit rechten und linken Sitzteilen zum Sitzen für Heckinsassen (42) versehen ist, an der Rückseite eines Vordersitzes (31) zum Sitzen für einen Fahrer (M1) vorgesehen ist;
der Rücksitz (40) mit einer Rückenlehne (45) für das rechte Sitzteil und das linke Sitzteil versehen ist; und
die Rückenlehne (45) eine linke Rückenlehnenabschrägung (46), welche nach links geneigt ist, und eine rechte Rückenlehnenabschrägung (46), welche nach rechts geneigt ist, aufweist, wenn in der Fahrtrichtung eines Fahrzeugs (10) gesehen.

2. Sitzanordnung für ein Fahrzeug gemäß Anspruch 1, wobei:
konvexe Abschnitte (44, 47), welche die Bewegung in der Richtung der Breite (W1, W2) des Körpers der sitzenden Heckpassagiere (M2) regulieren, zwischen jedem Sitzteil (42) in dem Rücksitz (40) und zu dem Zentrum der Rückenlehne (45) vorgesehen sind.

3. Sitzanordnung für ein Fahrzeug gemäß Anspruch 1 oder 2, wobei:
das vordere Ende von jedem Sitzteil in dem Rücksitz (42a) nach hinten konkav ist.

4. Sitzanordnung für ein Fahrzeug gemäß Anspruch 1, 2 oder 3, wobei:
der Vordersitz (30) mit einem Sitzteil für einen Fahrer (31), einer Rückenlehne für den Fahrer (32) und Seitenstützen für den Fahrer (33) versehen ist; und
ein konvexer Abschnitt (34) zum Regulieren der Bewegung in der Richtung der Breite (W2) des Körpers des sitzenden Fahrers (M1) zu dem Zentrum der Vorderseite des Sitzteils für den Fahrer (32) vorgesehen ist.

5. Sitzanordnung für ein Fahrzeug gemäß irgendeinem der Ansprüche 1 bis 4, wobei:
die Breite des vorderen Endes des Rücksitzes (W1) kleiner ist als die Breite des Vordersitzes (W2).

## Revendications

1. Structure de siège de véhicule, dans laquelle :
un large siège arrière (40) pourvu de parties d'assise droite et gauche pour que des occupants arrière (42) s'asseyent est prévu à l'arrière d'un siège avant (31) pour qu'un conducteur (M1) s'asseye ;
le siège arrière (40) est pourvu d'un dossier (45) pour la partie d'assise droite et la partie d'assise gauche ; et
le dossier (45) comprend un biseau de dossier gauche (46) incliné vers la gauche et un biseau de dossier droit (46) incliné vers la droite lorsqu'il est vu dans une direction de déplacement d'un véhicule (10).

2. Structure de siège de véhicule selon la revendication 1, dans laquelle :
des parties convexes (44, 47) régulant le mouvement dans la direction de la largeur (W1, W2) du corps des occupants arrière (M2) assis sont prévues entre chaque partie d'assise (42) dans le siège arrière (40) et au centre du dossier (45).

3. Structure de siège de véhicule selon la revendication 1 ou 2, dans laquelle :
l'extrémité avant de chaque partie d'assise dans le siège arrière (42a) est concave vers l'arrière.

4. Structure de siège de véhicule selon la revendication 1, 2 ou 3, dans laquelle :
le siège avant (30) est pourvu d'une partie d'assise pour un conducteur (31), d'un dossier pour le conducteur (32) et de supports latéraux pour le conducteur (33) ; et
une partie convexe (34) pour réguler le mouvement dans la direction de la largeur (W2) du corps du conducteur (M1) assis est prévue au centre de l'avant de la partie d'assise pour le conducteur (32).

5. Structure de siège de véhicule selon l'une quelconque des revendications 1 à 4, dans laquelle :
la largeur de l'extrémité avant du siège arrière (W1) est inférieure à la largeur du siège avant (W2).
